# EUROPEAN PATENT SPECIFICATION

(11) **EP 4 015 248 B1**
(45) Date of publication and mention of the grant of the patent: **01.05.2024**
(21) Application number: 21212521.5
(22) Date of filing: 06.12.2021
(51) Int. Cl.: B60C 11/04, B60C 11/11, B60C 19/12, B60C 19/00, B29D 30/06, B60C 11/03

(54) **A PNEUMATIC TIRE WITH SEALANT**
LUFTREIFEN MIT DICHTMITTEL
PNEU DOTÉ D'UN MATÉRIAU D'ÉTANCHÉITÉ

(30) Priority: 18.12.2020 US 202063127671 P
(43) Date of publication of application: 22.06.2022
(73) Proprietor: The Goodyear Tire & Rubber Company, Akron, OH 44316 (US)
(72) Inventor: GRIFFOIN, Jean-Claude Patrice Philippe, L-9170 Mertzig (LU); BRÜCKNER, Moritz, D-63776 Mömbris (DE); GOERL, Roman, D-63785 Obernburg am Main (DE); GUPTA, Sameer, D-63450 Hanau (DE); PIERRET, Kevin Erik M, B-6640 Vaux-Sur-Sure (BE)
(74) Representative: Kutsch, Bernd

(56) References cited:
- WO-A1-2022/069819
- DE-A1-102016 212 473
- US-A1- 2016 167 455

## Description

### Field of the Invention

This invention specifically relates to a pneumatic tire, in particular a pneumatic tire having on its interior surface a sealant layer, optionally carrying at least one foam element.

### Background of the Invention

Self-sealing pneumatic tires typically retard or prevent the loss of air pressure and consequential deflation of the tire after it has been punctured with a sharp object, such as a nail or screw. A plurality of methods, sealants and tire constructions have been suggested for puncture sealant pneumatic tires. However, most of these approaches have had drawbacks.

While the sealant helps in many cases to efficiently seal a puncture, it often results in additional weight and heat isolation. This may result in limited ride and handling performance and/or undesirable heat distributions in the tire. Such drawbacks may be even more relevant if an additional noise dampening element is attached to a radially inner side of the sealant material layer. In particular, such a noise dampening element may even further negatively impact temperature distribution in the tire.

Moreover, the attachment of a noise dampening element on sealant material may negatively impact the sealing performance of the sealant material due to an interaction with the noise dampening element. Such an attachment is shown in DE10 2016 212 473 A.

It would therefore be desirable to provide an improved tire having a good sealant performance and/or limited heat build-up as well as low noise generation resulting from tire cavity resonance.

### Summary of the Invention

A first object of the present invention may be to provide an advanced pneumatic tire having self-sealing properties.

Another object of the present invention may be to provide an advanced pneumatic tire with a sealant material layer supporting improved ride and handling properties.

Another object of the present invention may be to provide an advanced pneumatic tire having improved high speed properties and/or improved temperature behavior, in particular at high speeds.

Another object of the present invention may be to provide a sealant tire with limited weight, and preferably with limited tire cavity noise.

Still another object of the present invention may to provide a cost-efficient sealant tire, in particular with decent sound dampening and sealing properties.

The present invention is defined by independent claim 1. Preferred embodiments are provided in the dependent claims and the summary of the invention herein below.

Thus, in the invention, a pneumatic tire is provided, said tire comprising a tread portion having i) circumferential grooves and ii) circumferential ribs or rows of tread blocks; optionally two bead portions and two sidewalls extending between the tread portion and the respective bead portion(s); an inner surface defining a tire cavity; and a sealant material layer at least partially or fully covering the inner surface radially below the tread portion within the tire cavity. The sealant material layer comprises elevations of sealant material, wherein an elevation of sealant material is provided radially below each of at least two of the circumferential grooves, and wherein the sealant material layer has a larger radial thickness in said elevations than in areas radially below the circumferential ribs or rows of tread blocks. Still in accordance with the present invention, at least one foam element is attached to a radially inner surface of at least two axially neighboring elevations such that at least one air cavity is formed between said axially neighboring elevations, a radially outer surface of the foam element and a radially inner surface of the sealant material layer between said axially neighboring elevations.

The arrangement of the sealant material in accordance with the present invention helps to reduce heat build-up under the relatively thick tread ribs or tread blocks whereas the sealant material thickness is larger below at least two of the circumferential grooves (optionally below all circumferential grooves), in particular the circumferential main grooves. In the area of said grooves, the tread has less rubber material than in the areas below ribs or rows of tread blocks such that heat build-up is limited in these areas below the grooves. As rubber thickness radially below the grooves is relatively thin, these portions may also be punctured more easily than areas of larger rubber thickness such as below the tread ribs. The larger sealant material layer thickness below the grooves helps to mitigate the higher risk of puncture in these groove areas. It would be less desirable to provide a relatively thick sealant layer over the whole axial width of the tread as this would result in a higher heat build-up under the whole tread portion.

In particular, it has also been found that the presence of a foam element such as a foam block or circumferentially extending foam strip on a sealant material layer may negatively affect the flow and/or sealant properties of the sealant material in case of puncture. Moreover, the presence of the foam results in a decreased heat conductivity towards the tire cavity and thus potentially in a heat build-up. The attachment of the foam element (such as block or circumferentially extending strip) to neighboring elevations helps to mitigate said drawbacks.

In one embodiment, each elevation (or in other words ridge) has an axial width within a range of 70% to 130% of an axial width of a bottom of a circumferential groove radially above the respective elevation. Thus, an, or one, elevation covers at least a substantial axial width of the groove radially above or outside the elevation. In particular, it is less desirable to have a smaller or larger width as this would either impair sealability or heat conductivity.

In another embodiment, an elevation of the sealant material is provided radially below each of said circumferential grooves. Such an arrangement provides the positive effects of the invention for all circumferential grooves.

In one embodiment, the pneumatic tire comprises at least two (preferably at least three, more preferably at least four or even more preferably at least five) circumferential grooves and at least three (preferably at least four, more preferably at least five, or even more preferably at least six) circumferential ribs or rows of tread blocks. The circumferential grooves can also be described as circumferential main grooves.

In another embodiment, said elevations extend circumferentially over at least 95% of the inner circumference or surface of the tire (in particular, at the axial position of the respective elevation).

In another embodiment, the largest radial thickness of the elevations is within a range of 3 mm to 9 mm (preferably 3 or 4 mm to 8 mm), measured from the inner surface of the tire to the radially innermost surface of the respective elevation. In general, the radially inner surface, or in other words interior surface, is preferably formed by an inner liner of the tire.

In still another embodiment, a radial thickness of the sealant material layer is, at an axial position in the middle between two neighboring elevations, within a range of 2 mm to 6 mm, (preferably 3 mm to 5 mm). Two neighboring elevations are understood as axially neighboring elevations unless indicated otherwise herein.

In yet another embodiment, a radial thickness of the sealant material layer between two neighboring elevations is on average within a range of 2 mm to 6 mm. In particular, it is possible that the sealant material surface has a certain roughness, e.g. caused by the manufacturing method, such as the application of sealant material strips.

In still another embodiment, a difference between i) a radial thickness of the sealant material layer in the middle between two neighboring elevations (or an average of the radial thickness of the sealant material between two neighboring elevations) and ii) a largest radial thickness of one of the neighboring elevations is at least 0.5 mm, preferably at least 0.8 mm, or even more preferably at least 1 mm or yet more preferably at least 1.5 mm. In addition, or alternatively, said difference may be at most 3 mm, preferably at most 2 mm or at most 1.6 mm. If two neighboring elevations have different largest radial thicknesses, the elevation having the smaller largest radial thickness is considered herein.

In still another embodiment, the sealant material layer extends over at least 90% of the width of said tread portion or tread, measured in an axial direction of the tire. In a further another embodiment, the tire comprises a belt portion radially below the tread portion, said belt portion comprising multiple belt plies arranged radially on top of one another, and wherein the sealant material layer extends over at least 95% of the width, measured in an axial direction, of the axially largest belt ply.

In still another embodiment, a radial thickness of an elevation of two neighboring elevations, measured from the inner surface of the tire (e.g. the inner liner) to the radially innermost surface, or tip of the respective elevation, is one or more of:
(i) at least 15% larger, preferably at least 20% larger, than a radial thickness of the sealant material layer in the middle between the two neighboring elevations or the average radial thickness between these neighboring elevations; and
(ii) at most 100%, preferably at most 50%, larger than a radial thickness of the sealant material layer in the middle between the two neighboring elevations or than an average radial thickness of the sealant material layer between said neighboring elevations. In particular, very thick sealant material areas may be less desirable, even at the position of the grooves.

For instance, said radial thickness of the elevations can be 15% to 100%, 20% to 90%, 30% to 80% greater or 40% to 70% greater than the radial thickness of the sealant material layer in the middle between the two neighboring elevations or the average radial thickness between these neighboring elevations.

In still another embodiment, the sealant material layer comprises one of:
(i) axially adjacent sealant material strips extending essentially circumferentially (i.e. with an angle of 0° to 0.5° or 0° with respect to the equatorial plane of the tire) about an axis of the tire and along the inner surface of the tire (e.g. on the inner liner of the tire), and
(ii) one or more sealant material strips spirally (e.g. with an angle smaller than 5° or even smaller than 2° with respect to the equatorial plane of the tire) wound about an axis of the tire and along the inner surface, e.g. the inner liner, of the tire.

In particular, such a sealant layer is efficiently applicable to a tire after cure of the tire.

In still another embodiment, the sealant material strips form the elevations and/or the areas of the sealant material layer radially below the circumferential ribs or rows of tread blocks, and wherein the sealant material strips are optionally one or more of:
- radially thicker in areas radially below the circumferential grooves than in the areas radially below the circumferential ribs or rows of tread blocks so as to form the elevations in the sealant material layer; and
- preferably at least in the elevations, arranged on top of one another other so as to form at least the elevations in the sealant material layer.

Thus, it is possible that sealant material strips, or in other words beads, are only arranged on top of one another in the elevations. It is also possible that areas between two neighboring elevations comprise multiple layers of strips arranged on top of one another in radial direction. In such a case, the elevations can typically have even more layers of strips of sealant material.

In another embodiment, a sealant material strip could for instance have one of an essentially rectangular cross section, an essentially polygonal cross section, an essentially circular cross section and an essential ellipsoidal cross section.

In still another embodiment, the largest radial thickness of a sealant material strip corresponds to the largest radial thickness of an elevation so as to form the elevation in the sealant material layer.

In still another embodiment, the sealant material layer comprises sealant material strips with different radial thickness, such as strips having the radial height of the elevations and strips having a smaller radial height than the strips forming the elevations so as to form the areas of the sealant material layer between the elevations.

In still another embodiment, the elevations have an axial width within a range of 80% to 120%, preferably 90% to 110%, of the axial width of the bottom of the respective grooves radially above the elevations.

In another embodiment, each elevation is essentially axially centered with respect to the axial center of a bottom of the respective groove arranged radially above the elevation.

In still another embodiment, the tread portion has two shoulder portions and a middle or center portion arranged axially between the two shoulder portions, wherein each shoulder portion comprises a circumferential shoulder rib or circumferential row of shoulder tread blocks. In addition, or alternatively, the center portion comprises at least three circumferential ribs and at least four circumferential grooves. Each shoulder rib may optionally be delimited by one of the at least four circumferential grooves, in particular by a respective axially outermost circumferential groove. Such arrangements of ribs and grooves are typically found in relatively broad high performance tires, in particular UHP summer tires.

In still another embodiment, i) the elevations in the sealant material layer and ii) areas of the sealant material layer having a radial thickness smaller than the radial thickness of said elevations alternate along an axial direction of the tire. Preferably, the tire has at least 3 of said areas and four of such elevations alternatingly arranged along the axial direction.

In an embodiment, the sealant material layer has, viewed in an axial direction, at least 3 elevations formed between adjacent areas of sealant material having a smaller radial thickness than said elevations. The areas of sealant material axially between two adjacent elevations may also be generally described as valleys in the sealant material layer.

In still another embodiment, said areas of the sealant material layer having a radial thickness smaller than the radial thickness of said elevations have an axial width within a range of 60% to 120% of the radially outermost surface of the respective rib or respective row of tread blocks radially above.

In still another embodiment, the sealant material is one or more of: a butyl rubber-based composition, a polyisoprene-based composition, a natural rubber-based composition, a polyurethane-based composition, a polybutene-based composition, an emulsion styrene-butadiene rubber-based composition, an EPDM-based composition, and a silicone-based composition. For instance, the sealant material can be a blend of butyl rubber and polyisobutylene as described in United States Patent 4,895,610. In another embodiment, the sealant material can be comprised of expanded solids comprising expandable graphene structures and microspheres as described by United States Patent 9,802,446. The sealant material composition can in another embodiment be comprised of at least one non-halogenated butyl rubber and 2,2'-dibenzamido-diphenyldisulfide, the sealant material composition having a viscosity that permits the sealant material composition to be incorporated into a tire during a tire building process and to degrade to a lower viscosity that permits the resulting degraded sealant material composition to flow into and seal a puncture in a tire. This sealant composition is described in greater detail in United States Patent 8,360,122.

In another embodiment, multiple foam blocks are arranged along the circumferential direction of the tire.

In still another embodiment, the foam element is at least one foam strip continuously or discontinuously extending along a circumferential length which corresponds to at least 50%, preferably at least 80%, of an inner circumference of the tire measured along the inner surface at an axial center of the tire.

In still another embodiment, the foam strip extends about the (center) axis of the tire.

In still another embodiment, the axial width of the foam element (e.g. a foam block or foam strip) is within a range of 20% to 50% of a maximum axial width of the sealant material layer. The tire may have multiple foam elements such as said strips or blocks. In particular, it may be desirable to a have a limited axial width of the foam elements in order to avoid unnecessary heat build-up in a region of the tire to which the foam element is attached. In general, the foam elements, in particular the foam strips could have polygonal, e.g. rectangular, cross-sections in non-limiting examples.

In still another embodiment, the foam element has an axial width which is larger than the distance between two neighboring elevations to which the foam element is attached.

In still another embodiment, the foam element has a radially inner portion which has a larger axial width than a radially outer portion or outermost surface attached to two neighboring elevations. Such an embodiment provides a relatively large volume of foam with a limited surface close to the sealant material layer.

In another embodiment, the axial width of each elevation is smaller than 50%, preferably smaller than 30%, or even smaller than 20%, of the axial width of the foam element, such as the circumferential foam strip.

In still another embodiment, the foam element, in particular the strip or block is free of a coating or foil facing the sealant material layer.

In another embodiment, the foam element comprises (or consists of) one or more of: a noise dampening material; a porous material; a polymeric foam material; a polyurethane foam material; a material having a density within a range of 0.01 g/cm³ to 1 g/cm³. The terms damping and dampening are used interchangeably herein.

In another embodiment, the foam element comprises or consists of a porous material and/or one or more of the following materials: polyurethane foam (e.g. polyether-urethanes, polyester-urethanes), melamine foam, polypropylene foam, foamed rubber (e.g. EPDM, Neoprene based foams), natural material-based foam (e.g. cellulose, chitosan-based foams), non-woven material (e.g. felt from melt-blown, spun laid or electro spun or natural fiber of polyester, polyamide, PE, PET, PP, cellulose, cotton, wool or silk). In addition, or alternatively, the foam element comprises or consists of one or more of the following: polyurethane foam, polyethylene foam, foam rubber, and the like. Suitable polyurethane foams are typically made by the polymerization of a diisocyanate and a polyol in the presence of a suitable blowing agent. A wide variety of rubber foams can be utilized in the practice of this invention with natural rubber, synthetic polyisoprene rubber, polybutadiene rubber, nitrile rubber, and styrene-butadiene rubber foams being commonly used. Such foam rubbers are typically made by foaming a natural or synthetic rubber latex with a chemical foaming agent. The chemical foaming agent will typically be an azo compound, such as azodicarbonamide, a hydrazine compound, a carbazide, a tetrazole, a nitroso compound, and/or a carbonate, such as sodium bicarbonate.

In still another embodiment, one or more foam strips are arranged (preferably essentially in parallel) along the circumferential direction. The provision of multiple strips may reduce the size of continuous regions covered by noise dampening material and may thus reduce heat build-up in the tire radially above the strips.

In another embodiment, the foam element is made of open cell foam material. Preferably such material comprises from 55% to 95% (or preferably from 60% to 90%) open cells (of all cells) in the material. An open cell can be understood as a cell having at least one aperture. In other words, open cells are not fully closed or not fully enclosed by a cell wall. Closed cell foam does not fall into the above range as most cells of this foam type are closed. Fully or almost fully reticulated foam does not fall under that range either as it has almost no walls and constitutes rather an open grid. Whether cells are open or not (i.e. closed) can for instance be determined by light microscopy, SEM or NMR. Cell sizes could typically range from 10 µm to 1 mm (maximum diameter).

In another embodiment, the foam is adapted and/or used for dampening tire cavity noise, in particular in the range from 100 Hz to 300 Hz or in the range from 100 Hz to 200 Hz or from 200 Hz to 300 Hz. The term tire cavity, as mentioned herein, shall be the volume enclosed by the inner surface of the tire (or, if present, by the inner liner of the tire), especially in an unmounted and uninflated state, and closed by an (imaginary) circumferential ring-shaped plane contacting the radially innermost edges of both bead portions.

In still another embodiment, the foam element adheres (directly) to the sealant material. In other words, the interface between sealant material and foam element is free of additional adhesives or glues. It is rather the stickiness of the sealant material which holds the foam element in place.

In another aspect of the present invention, a method of manufacturing a pneumatic tire is provided, preferably the pneumatic tire according to the preceding aspect or one or more of its embodiments, the method comprising one or more of the following steps:
a) Providing an uncured pneumatic tire, comprising a tread portion, and optionally two bead portion and two sidewalls connecting the respective bead portion with the tread portion, wherein the tread portion has multiple circumferential grooves;
b) Curing the tire;
c) Forming a sealant material layer on an inner surface (e.g. on an inner liner) of the cured tire by applying one or more sealant material strips onto said inner surface, and forming elevations in the sealant material layer in areas radially below (or in other words radially inside of) the circumferential grooves of the tread portion;
d) Attaching to the radially innermost portion of two neighboring elevations at least one foam element.

In one embodiment, the sealant material layer is formed by applying one or more sealant material strips spirally about an axis of the tire and along the inner surface of the tire.

In another embodiment, the step of forming the sealant material layer comprises rotating the tire about its rotation axis and extruding the sealant material strips onto the rotating inner surface of the tire.

In still another embodiment, the strips are extruded by an extrusion head and/or die which is movable or moved in an axial direction relatively to the tire during extrusion of the sealant material strips. Together with said rotation of the tire, circumferential or spiral strips may be applied to the inner surface of the tire.

In another embodiment, the sealant material layer is formed by applying (at the same time or subsequently) axially adjacent sealant material strips extending circumferentially about an axis of the tire and along the inner surface of the tire.

In still another embodiment, said strips are extruded or applied with a larger thickness when forming an elevation.

In still another embodiment, multiple layers of strips (in particular 2 or 3 layers) are arranged on top of each other at least in the elevations.

In still another embodiment, the sealant material strips have an axial width within a range of 2 mm to 15 mm, preferably 5 mm to 12 mm, or even more preferably 7.5 mm to 12 mm or 8 mm to 15 mm.

In still another embodiment, the larger thickness of sealant material in the elevations is provided by one or more of: extruding the sealant material strips with higher speed than in regions having smaller radial thickness; extruding the sealant material strips with higher pressure than in the regions having smaller radial thickness; using (extrusion) dies with larger outlet diameters; using extrusion dies with adjustable, in particular enlargeable, outlet diameters; rotating the tire slower about its rotation axis when extruding the strips in the elevations than when extruding the strips in regions with smaller radial thickness.

The above described application of sealant material strips is of particular interest in combination with foam strips or in other words noise dampening foam strips, essentially extending in a circumferential direction.

In still another embodiment, the method further comprises a step of applying a first layer of one or more sealant material strips over the total axial width of the sealant material layer and a further step of applying at least a second layer (discontinuously or continuously) of one or more sealant material strips, wherein the second layer of sealant material strips forms the elevations of sealant material.

In an embodiment, the tire is a passenger car tire, a truck tire or a bus tire.

In another embodiment, the tire has at least a width of 225, preferably at least of 245.

In yet another embodiment the tire is a summer tire.

In another embodiment, the tire is an all season tire, optionally showing the 3 peak mountain snow flake symbol (3PMSF symbol) on at least one sidewall.

In another embodiment the tire is a winter tire showing the 3 peak mountain snow flake symbol (3PMSF symbol) on at least one sidewall.

In general, the features of different aspects and embodiments of the invention as well as of the below description can be combined with one another.

### Brief Description of the Drawings

The structure, operation and advantages of the invention will become more apparent upon contemplation of the following description taken in conjunction with the accompanying drawings, wherein:
Figure 1 shows a schematic cross section of a prior art tire comprising a sealant material layer;
Figure 2 shows a schematic cross section of a sealant tire;
Figure 3 shows a schematic cross section of a prior art tire comprising a foam material strip attached to a sealant material layer; and
Figure 4 shows a schematic cross section of a noise dampened sealant tire in accordance with the present invention.

### Detailed Description of the Embodiments

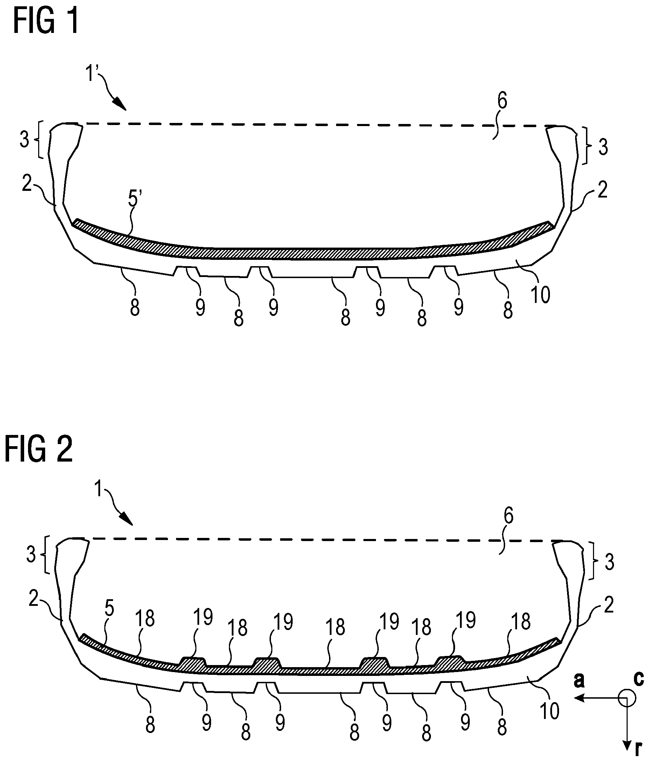

Figure 1 is a schematic cross-section of a tire 1' in accordance with the prior art. The example tire 1' has a tread portion 10, two bead portions 3, and two sidewalls 2 joining outer axial edges of the tread portion 10 with the respective bead portions 3. The tread portion 10 has a plurality of circumferential grooves 9 and ribs 8. Such pneumatic tire constructions are generally known in the tire art. The tire 1' has an inner surface defining a tire cavity 6. A sealant material layer 5' is provided on the inner side or surface of the tire 1' in an area opposite to the tread portion 10. The thickness of the sealant material layer 5' is essentially constant over the axial width and circumference of the tire 1'. For the sake of an improved intelligibility, reference signs (numerals) 2, 3, 6, 8, 9, and 10 are used for the same elements as described herein below in the description of Figures 2 to 4.

Similar to the tire 1' shown in Figure 1, tire 1 shown in Figure 2 has sidewalls 2, bead portions 3, a tread portion 10, a tire cavity 6, optionally delimited by an inner liner of the tire 1, circumferential grooves 9 (or in other words circumferential main grooves) as well as circumferential ribs 8.

The sealant material layer 5 according to Figure 2, extends in a circumferential direction c and in an axial direction a along the inner surface of the tire 1. The sealant material layer 5 has four elevations 19, wherein each elevation 19 is axially positioned radially below a groove 9. In other words, the sealant material layer 5 has thicker portions at the axial positions of the grooves 9 than in areas of smaller radial thickness 18 arranged at axial positions radially below the ribs 8. As a consequence, the thicker sealant material in areas radially inside of the grooves, improves the sealing performance of the tire 1 in areas where the tread rubber material is relatively thin compared to the areas of relatively thick tread rubber material at the axial position of the ribs 8. This arrangement provides an advanced compromise between sealability and weight impact of the sealant material. In particular, large amounts of sealant material result in a higher weight of the tire 1 and can thus lead to inferior ride and handling properties. Cost efficiency is improved as well compared to the tire 1' as shown in Figure 1. In addition, the fact of having a sealant material thickness which is smaller in the areas radially below the ribs 8 improves heat conductivity and/or avoids heat build-up in these areas, in particular for improved high speed performance and frequent cornering maneuvers. It is noted that the relative thickness of the depicted elevations 19 or in other words protrusions or ridges of sealant material in the radially inner direction is shown in Figure 1 schematically. Preferable absolute and relative thickness values have been mentioned herein above. In a non-limiting embodiment, the thickness of the sealant material layer 5 is about 3.6 mm in areas 18 between the elevations 19 whereas the largest thickness of the sealant material layer 5 in the elevations 19 is about 4.5 mm.

For the sake of better comprehensibility, the axial direction a, the circumferential direction c and the radial direction r have been indicated in Figure 2 as commonly used in the description of tire geometries. The term direction shall not be limited to a certain orientation unless otherwise indicated herein. An axial direction a may be understood as a direction in parallel to the rotation axis of the tire 1. The circumferential direction c is concentric to the rotation axis of the tire 1 and the radial direction r extends radially from the latter as commonly understood in the tire art.

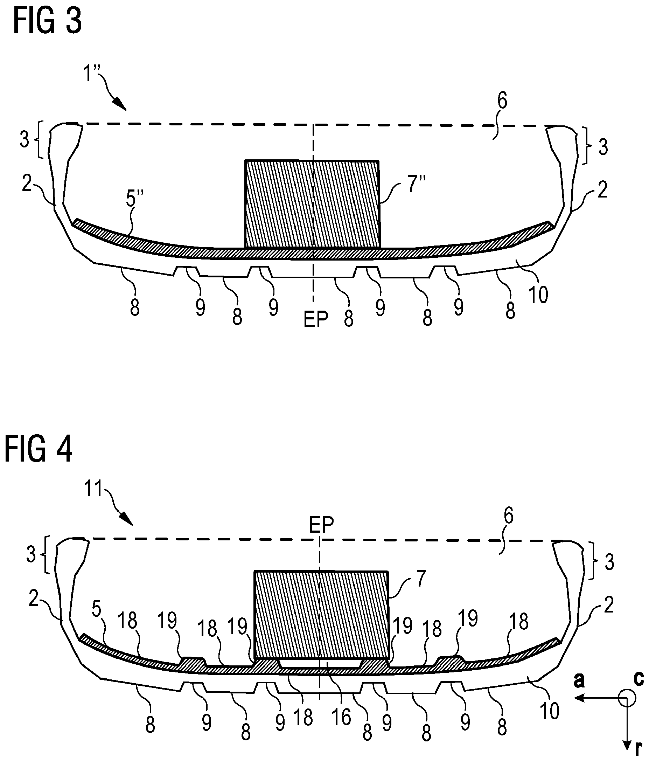

Figure 3 shows a prior art tire 1" with elements 2, 3, 6, 8, 9, 10 as already described in relation to Figures 1 and 2 above, but includes a sealant material layer 5" carrying a noise dampening element 7". Such a noise dampening element 7" may be used to dampen or reduce the noise generated in the tire cavity 6 when driving. A drawback of such an arrangement consists in a relatively large heat build-up radially above the noise dampening element 7" which is acting together with the sealant material layer 5" as a thermal insulator. This may negatively impact tire performance and/or stability. Moreover, it has been found that such noise dampening elements 7" may negatively affect the performance of the sealant material by hindering the free flow of the sealant material into a puncture hole in the tread. Therefore, such an arrangement typically requires a relatively thick sealant material layer 5" which has again a negative impact on costs, weight and heat conductivity, and therefore also on tire performance.

According to the invention, in the form of a tire 11 as shown in Figure 4, using again same reference signs as in the previously discussed Figures where applicable, a foam element, such as a circumferential foam strip 7 is attached to a sealant material layer 5. The sealant material layer 5 has, by way of non-limiting example, the same shape as in Figure 2 so that it comprises elevations 19, radially below the grooves 9 and areas of smaller sealant material thickness 18 radially below the ribs 8. The foam strip 7 is attached to two elevations 19 so as to form an air cavity 16 between the sealant material layer 5 and the foam strip 7. Thus, the foam strip 7 is not directly contacting the sealant material layer 5 over its whole axial width. Heat build-up below the foam strip and also in the area of the ribs is reduced. Moreover, sealant material flow into puncture holes radially above the foam strip 7 is ensured due to relatively large sealant material thickness in positions where the sealant material contacts the foam strip 7 and due to the air cavity 16 in an area between the two neighboring elevations 19 covered by the foam strip 7. In addition, the relatively large sealant material thickness radially below the circumferential main grooves 9 provides an improved security feature. Sealant material is saved in the areas 18 so as to reduce overall weight and improve heat conductivity.

While a foam strip 7 has been described in this embodiment as one example of a foam element, it is also possible that multiple foam strip segments are provided behind each other in the circumferential direction or multiple foam blocks are provide along the circumferential direction and attached to at least two axially neighboring elevations.

It is preferred that foam elements such as the circumferential foam strip 7 are positioned at an axial center of the tire 11 or in other words along the equatorial plane EP of the tire 11 as shown in Figure 4. Such an arrangement improves tire balance.

## Claims

1. A pneumatic tire (1, 11) comprising a tread portion (10) having (i) circumferential grooves (9) and (ii) circumferential ribs (8) or rows of tread blocks; an inner surface defining a tire cavity (6); and a sealant material layer (5) at least partially covering the inner surface radially below the tread portion (10) within the tire cavity (6), the sealant material layer (5) comprising elevations (19) of sealant material, wherein an elevation (19) of sealant material is provided radially below each of at least two of the circumferential grooves (9), and wherein the sealant material layer (5) has a larger radial thickness in said elevations (19) than in areas (18) radially below the circumferential ribs (8) or rows of tread blocks;
**characterized in that** at least one foam element (7) is attached to a radially inner surface of at least two axially neighboring elevations (19) such that at least one air cavity (16) is formed between said axially neighboring elevations (19), a radially outer surface of the foam element (7) and a radially inner surface of the sealant material layer (5) between said axially neighboring elevations (19).

2. The pneumatic tire according to claim 1, **characterized in that** each elevation (19) has an axial width within a range of 70% to 130% of an axial width of a bottom of a circumferential groove (9) radially above the respective elevation (19).

3. The pneumatic tire according to claim 1 or 2, **characterized in that** a radial thickness of an elevation (19) of two neighboring elevations (19), measured from the inner surface of the tire (1, 11) to the radially innermost surface of the respective elevation (19), is one or more of:
at least 15% larger than a radial thickness of the sealant material layer (5) in the middle between the two neighboring elevations (19); and
at most 100% larger than a radial thickness of the sealant material layer (5) in the middle between the two neighboring elevations (19).

4. The pneumatic tire according to one or more of the preceding claims, **characterized in that** the tire (1, 11) comprises at least three circumferential grooves (8) and at least four circumferential ribs (9) or rows of tread blocks.

5. The pneumatic tire according to one or more of the preceding claims, **characterized in that** an elevation (19) of the sealant material is provided radially below each of said circumferential grooves (9).

6. The pneumatic tire according to one or more of the preceding claims,
**characterized in that** the largest radial thickness of the elevations (19) is within a range of 3 mm to 9 mm, measured from the inner surface of the tire (1, 11) to the radially innermost surface of the respective elevation (19); and/or
**characterized in that** a radial thickness of the sealant material layer (5) in the middle between two neighboring elevations (19) is within a range of 2 mm to 6 mm.

7. The pneumatic tire according to one or more of the preceding claims,
**characterized in that** a difference between i) a radial thickness of the sealant layer (5) in the middle between two neighboring elevations (19) and ii) a largest radial thickness of one of the neighboring elevations (19), is at least 0.5 mm; and/or
**characterized in that** the sealant material layer (5) extends in an axial direction over at least 90% of the width of said tread portion (10).

8. The pneumatic tire according to one or more of the preceding claims, **characterized in that** the sealant material comprises one or more of: a butyl rubber-based composition, a polyisoprene-based composition, a natural rubber-based composition, a polyurethane-based composition, a polybutene-based composition, an emulsion styrene-butadiene rubber-based composition, an EPDM-based composition, and a silicone-based composition.

9. The pneumatic tire according to one or more of the preceding claims, **characterized in that** the sealant material layer comprises one of:
(i) axially adjacent sealant material strips extending circumferentially about an axis of the tire (1, 11) and along the inner surface of the tire (1, 11), and
(ii) one or more sealant material strips spirally wound about an axis of the tire (1, 11) and along the inner surface of the tire (1, 11).

10. The pneumatic tire according to claim 9, **characterized in that** the sealant material strips form the elevations (19) and the areas of the sealant material layer (5) radially below the circumferential ribs (9) or rows of tread blocks, and wherein at least multiple sealant material strips are one or more of:
radially thicker in areas radially below the circumferential grooves (8) than in the areas (18) radially below the circumferential ribs (9) or rows of tread blocks so as to form the elevations in the sealant material layer (5);
arranged on top of one another so as to form the elevations (19) in the sealant material layer (5).

11. The pneumatic tire according to one or more of the preceding claims,
**characterized in that** the tread portion (10) has two shoulder portions and a center portion axially between the two shoulder portions, and wherein each shoulder portion comprises a circumferential shoulder rib or row of shoulder tread blocks, and the center portion comprises at least three circumferential ribs and at least four circumferential grooves, and wherein each shoulder rib is delimited by one of the at least four circumferential grooves; and/or
**characterized in that** the elevations (19) in the sealant material layer (5) and areas (18) of the sealant material layer having a radial thickness smaller than the radial thickness of said elevations (19) alternate along an axial direction (a) of the tire (1, 11); and/or
**characterized in that** said areas (18) of the sealant material layer (5) having a radial thickness smaller than the radial thickness of said elevations (19) have an axial width within a range of 60% to 120% of the radially outermost surface of the respective rib or respective row of tread blocks radially above.

12. The pneumatic tire according to one or more of the preceding claims, **characterized in that** the foam element (7) is a foam strip extending in a circumferential direction (c) along a circumferential length corresponding to at least 50%, preferably at least 80%, of an inner circumference of the tire (11), measured along the inner surface at an axial center of the tire (11).

13. The pneumatic tire according to one or more of the preceding claims,
**characterized in that** the axial width of the foam element (7) is within a range of 20% to 50% of a maximum axial width of the sealant material layer (5); and/or
**characterized in that** the foam element (7) is free of a coating or foil facing the sealant material layer (5).

14. The pneumatic tire according to one or more of the preceding claims, **characterized in that** the foam element (7) comprises one or more of:
a noise dampening material;
a polymeric foam material;
a polyurethane foam material;
a strip shape; and
a material having a density within a range of 0.01 g/cm³ to 1 g/cm³.

15. A method of manufacturing a tire according to one or more of the preceding claims, the method comprising steps of:
curing the tire (1, 11);
forming the sealant material layer (5) on an inner surface of the cured tire (1, 11) by applying one or more sealant material strips onto said inner surface and forming elevations (19) in the sealant material layer (5) in areas radially below circumferential grooves (9) of the tire's tread portion (10); and
optionally attaching at least one foam element (7) to the radially innermost portions of two neighboring elevations (19).

## Patentansprüche

1. Luftreifen (1, 11), der einen Laufflächenabschnitt (10) umfasst, der (i) Umfangsrillen (9) und (ii) Umfangsrippen (8) oder Reihen von Laufflächenblöcken; eine einen Reifenhohlraum (6) definierende Innenfläche; und eine zumindest teilweise die Innenfläche radial unterhalb des Laufflächenabschnitts (10) innerhalb des Reifenhohlraums (6) bedeckende Dichtungsmaterialschicht (5) aufweist, wobei die Dichtungsmaterialschicht (5) Vorsprünge (19) aus Dichtungsmaterial umfasst, wobei ein Vorsprung (19) aus Dichtungsmaterial radial unter jeder von mindestens zwei der Umfangsrillen (9) vorgesehen ist, und wobei die Dichtungsmaterialschicht (5) eine größere radiale Dicke in den oben genannten Vorsprüngen (19) als in Bereichen (18) radial unter den Umfangsrippen (8) oder den Reihen von Laufflächenblöcken aufweist;
**dadurch gekennzeichnet, dass** mindestens ein Schaumstoffelement (7) an einer radial inneren Oberfläche von mindestens zwei axial benachbarten Vorsprüngen (19) befestigt ist, so dass mindestens ein Lufthohlraum (16) zwischen den axial benachbarten Vorsprüngen (19), eine radial äußere Oberfläche des Schaumstoffelements (7) und eine radial innere Oberfläche der Dichtungsmaterialschicht (5) zwischen den oben genannten axial benachbarten Vorsprüngen (19) gebildet wird.

2. Luftreifen nach Anspruch 1, **dadurch gekennzeichnet, dass** jeder Vorsprung (19) eine axiale Breite innerhalb eines Bereichs von 70 % bis 130 % einer axialen Breite eines Bodens einer Umfangsrille (9) radial oberhalb des jeweiligen Vorsprungs (19) aufweist.

3. Luftreifen nach Anspruch 1 oder 2, **dadurch gekennzeichnet, dass** eine radiale Dicke eines Vorsprungs (19) von zwei benachbarten Vorsprüngen (19), gemessen von der Innenfläche des Reifens (1, 11) zu der radial innersten Fläche des jeweiligen Vorsprungs (19), eine oder mehrere der folgenden Eigenschaften ist:
eine radiale Dicke, die mindestens 15 % größer ist als eine radiale Dicke der Dichtungsmaterialschicht (5) in der Mitte zwischen den beiden benachbarten Vorsprüngen (19); und
eine radiale Dicke, die höchstens 100 % größer ist als eine radiale Dicke der Dichtungsmaterialschicht (5) in der Mitte zwischen den beiden benachbarten Vorsprüngen (19).

4. Luftreifen nach einem oder mehreren der vorhergehenden Ansprüche,
**dadurch gekennzeichnet, dass** der Reifen (1, 11) mindestens drei Umfangsrillen (9) und mindestens vier Umfangsrippen (8) oder Reihen von Laufflächenblöcken aufweist.

5. Luftreifen nach einem oder mehreren der vorhergehenden Ansprüche, **dadurch gekennzeichnet, dass** ein Vorsprung (19) des Dichtungsmaterials radial unter jeder der Umfangsrillen (9) vorgesehen ist.

6. Luftreifen nach einem oder mehreren der vorangehenden Ansprüche,
**dadurch gekennzeichnet, dass** die größte radiale Dicke der Vorsprünge (19) innerhalb eines Bereichs von 3 mm bis 9 mm liegt, gemessen von der Innenfläche des Reifens (1, 11) zu der radial innersten Fläche des jeweiligen Vorsprungs (19); und/oder
**dadurch gekennzeichnet, dass** eine radiale Dicke der Dichtungsmaterialschicht (5) in der Mitte zwischen zwei benachbarten Vorsprüngen (19) innerhalb eines Bereichs von 2 mm bis 6 mm liegt.

7. Luftreifen nach einem oder mehreren der vorhergehenden Ansprüche,
**dadurch gekennzeichnet, dass** eine Differenz zwischen i) einer radialen Dicke der Dichtungsmaterialschicht (5) in der Mitte zwischen zwei benachbarten Vorsprüngen (19) und ii) einer größten radialen Dicke einer der benachbarten Vorsprünge (19) mindestens 0,5 mm beträgt; und/oder
**dadurch gekennzeichnet, dass** die Dichtungsmaterialschicht (5) sich in einer axialen Richtung über mindestens 90 % der Breite des Laufflächenabschnitts (10) erstreckt.

8. Luftreifen nach einem oder mehreren der vorhergehenden Ansprüche, **dadurch gekennzeichnet, dass** das Dichtungsmaterial eine oder mehrere der folgenden Zusammensetzungen umfasst: eine Zusammensetzung auf Butylkautschukbasis, eine Zusammensetzung auf Polyisoprenbasis, eine Zusammensetzung auf Naturkautschukbasis, eine Zusammensetzung auf Polyurethanbasis, eine Zusammensetzung auf Polybutenbasis, eine Emulsionsstyrol-Butadien-Kautschukbasis, eine Zusammensetzung auf EPDM-Basis und eine Zusammensetzung auf Silikonbasis.

9. Luftreifen nach einem oder mehreren der vorhergehenden Ansprüche, **dadurch gekennzeichnet, dass** die Dichtungsmaterialschicht eines der folgenden Merkmale umfasst:
(i) axial benachbarte Dichtungsmaterialstreifen, die sich in Umfangsrichtung um eine Achse des Reifens (1, 11) und entlang der Innenfläche des Reifens (1, 11) erstrecken, und
(ii) einen oder mehrere Dichtungsmaterialstreifen, die spiralförmig um eine Achse des Reifens (1, 11) und entlang der Innenfläche des Reifens (1, 11) gewickelt sind.

10. Luftreifen nach Anspruch 9, **dadurch gekennzeichnet, dass** die Dichtungsmaterialstreifen die Vorsprünge (19) und die Bereiche der Dichtungsmaterialschicht (5) radial unterhalb der Umfangsrippen (8) oder der Reihen von Laufflächenblöcken bilden, und wobei mindestens mehrere Dichtungsmaterialstreifen eines oder mehrere der folgenden Merkmale sind:
Dichtungsmaterialstreifen, die so in Bereichen radial unterhalb der Umfangsrillen (8) dicker sind als in den Bereichen (18) radial unterhalb der Umfangsrippen (8) oder der Reihen von Laufflächenblöcken, dass sie die Vorsprünge in der Dichtungsmaterialschicht (5) bilden;
Dichtungsmaterialstreifen, die so übereinander angeordnet sind, dass sie die Vorsprünge (19) in der Dichtungsmaterialschicht (5) bilden.

11. Luftreifen nach einem oder mehreren der vorhergehenden Ansprüche,
**dadurch gekennzeichnet, dass** der Laufflächenabschnitt (10) zwei Schulterabschnitte und einen Mittelabschnitt axial zwischen den beiden Schulterabschnitten aufweist, und wobei jeder Schulterabschnitt eine umlaufende Schulterrippe oder eine Reihe von Schulterlaufflächenblöcken umfasst, und der Mittelabschnitt mindestens drei umlaufende Rippen und mindestens vier umlaufende Rillen umfasst, und wobei jede Schulterrippe durch eine der mindestens vier umlaufenden Rillen begrenzt ist; und/oder
**dadurch gekennzeichnet, dass** die Vorsprünge (19) in der Dichtungsmaterialschicht (5) und Bereiche (18) der Dichtungsmaterialschicht, die eine radiale Dicke, die kleiner ist als die radiale Dicke der Vorsprünge (19), aufweisen, sich entlang einer axialen Richtung (a) des Reifens (1, 11) abwechseln; und/oder
**dadurch gekennzeichnet, dass** die Bereiche (18) der Dichtungsmaterialschicht (5), die eine radiale Dicke, die kleiner ist als die radiale Dicke der Vorsprünge (19), aufweisen, eine axiale Breite innerhalb eines Bereichs von 60 % bis 120 % der radial äußersten Oberfläche der jeweiligen Rippe oder der jeweiligen Reihe von Laufflächenblöcken radial darüber aufweisen.

12. Luftreifen nach einem oder mehreren der vorhergehenden Ansprüche, **dadurch gekennzeichnet, dass** das Schaumstoffelement (7) ein Schaumstoffstreifen ist, der sich in einer Umfangsrichtung (c) entlang einer Umfangslänge erstreckt, die mindestens 50 %, vorzugsweise mindestens 80 %, eines Innenumfangs des Reifens (11) entspricht, gemessen entlang der Innenfläche in einer axialen Mitte des Reifens (11).

13. Luftreifen nach einem oder mehreren der vorhergehenden Ansprüche,
**dadurch gekennzeichnet, dass** die axiale Breite des Schaumstoffelements (7) innerhalb eines Bereichs von 20 % bis 50 % einer maximalen axialen Breite der Dichtungsmaterialschicht (5) liegt; und/oder
**dadurch gekennzeichnet, dass** das Schaumstoffelement (7) frei von einer der Dichtungsmaterialschicht (5) zugewandten Beschichtung oder Folie ist.

14. Luftreifen nach einem oder mehreren der vorhergehenden Ansprüche, **dadurch gekennzeichnet, dass** das Schaumstoffelement (7) eines oder mehrere der folgenden Elemente umfasst:
ein geräuschdämpfendes Material;
einen polymeren Schaumstoff;
einen Polyurethanschaumstoff;
eine Streifenform; und
ein Material, das eine Dichte in einem Bereich von 0,01 g/cm³ bis 1 g/cm³ aufweist.

15. Verfahren zur Herstellung eines Reifens nach einem oder mehreren der vorhergehenden Ansprüche, wobei das Verfahren die folgenden Schritte umfasst:
das Aushärten des Reifens (1, 11);
das Bilden der Dichtungsmaterialschicht (5) auf einer Innenfläche des vulkanisierten Reifens (1, 11) durch Aufbringen eines oder mehrerer Dichtungsmaterialstreifen auf die oben genannte Innenfläche und Bilden von Vorsprüngen (19) in der Dichtungsmaterialschicht (5) in Bereichen radial unterhalb von Umfangsrillen (9) des Laufflächenabschnitts (10) des Reifens; und
optional das Anbringen mindestens eines Schaumstoffelements (7) an den radial innersten Abschnitten von zwei benachbarten Vorsprüngen (19).

## Revendications

1. Bandage pneumatique (1, 11) qui comprend une portion (10) faisant office de bande de roulement possédant (i) des rainures circonférentielles (9) et (ii) des nervures circonférentielles (8) ou des rangées de pavés de bande de roulement ; une surface interne définissant une cavité de bandage pneumatique (6) ; et une couche de matériau d'étanchéité (5) qui recouvre au moins en partie la surface interne, dans la direction radiale, en dessous de la portion (10) faisant office de bande de roulement au sein de la cavité de bandage pneumatique (6), la couche de matériau d'étanchéité (5) comprenant des saillies (19) de matériau d'étanchéité, dans lequel une saillie (19) de matériau d'étanchéité est prévue, dans la direction radiale, en dessous de chacune d'au moins deux desdites rainures circonférentielles (9) ; et dans lequel la couche de matériau d'étanchéité (5) possède une épaisseur radiale dans lesdites saillies (19) supérieure à celle des zones (18) situées, dans la direction radiale, en dessous des nervures circonférentielles (8) ou des rangées de pavés de bande de roulement ;
**caractérisé en ce qu'**au moins un élément (7) sous la forme d'une mousse est fixé à une surface interne, dans la direction radiale, d'au moins deux saillies (19) voisines dans la direction axiale, d'une manière telle que l'on obtient au moins une cavité pour l'air (16) entre lesdites saillies (19) voisines dans la direction axiale, une surface externe, dans la direction radiale, de l'élément (7) sous la forme d'une mousse et une surface interne, dans la direction radiale, de la couche de matériau d'étanchéité (5) entre lesdites saillies (19) voisines dans la direction axiale.

2. Bandage pneumatique selon la revendication 1, caractérisé en en ce que chaque saillie (19) possède une largeur axiale qui se situe au sein d'une plage qui représente de 70 % à 130 % d'une largeur axiale d'une base d'une rainure circonférentielle (9), dans la direction radiale, au-dessus de la saillie respective (19).

3. Bandage pneumatique selon la revendication 1 ou 2, caractérisé en en ce qu'une épaisseur radiale d'une saillie (19) parmi deux saillies voisines (19), telle qu'on la mesure à partir de la surface interne du bandage pneumatique (1, 11) jusqu'à la surface la plus interne, dans la direction radiale, de la saillie respective (19), possède une ou plusieurs des caractéristiques indiquées ci-après, à savoir :
une largeur supérieure à concurrence d'au moins 15 % à une épaisseur radiale de la couche de matériau d'étanchéité (5) dans la zone médiane entre les deux saillies voisines (19) ; et
une largeur supérieure au maximum à concurrence de 100 % à une épaisseur radiale de la couche de matériau d'étanchéité (5) dans la zone médiane entre les deux saillies voisines (19).

4. Bandage pneumatique selon une ou plusieurs des revendications précédentes, **caractérisé en ce que** le bandage pneumatique (1, 11) comprend au moins trois rainures circonférentielles (8) et au moins quatre nervures circonférentielles (9) ou rangées de pavés de bande de roulement.

5. Bandage pneumatique selon une ou plusieurs des revendications précédentes, **caractérisé en ce qu'**une saillie (19) du matériau d'étanchéité est prévue, dans la direction radiale, en dessous de chacune desdites rainures circonférentielles (9).

6. Bandage pneumatique selon une ou plusieurs des revendications précédentes,
**caractérisé en ce que** l'épaisseur radiale la plus élevée des saillies (19) se situe au sein d'une plage allant de 3 mm à 9 mm, telle qu'on la mesure à partir de la surface interne du bandage pneumatique (1, 11) jusqu'à la surface la plus interne, dans la direction radiale, de la saillie respective (19) ; et/ou
**caractérisé en ce qu'**une épaisseur radiale de la couche de matériau d'étanchéité (5) dans la zone médiane entre deux saillies voisines (19) se situe au sein d'une plage allant de 2 mm à 6 mm.

7. Bandage pneumatique selon une ou plusieurs des revendications précédentes,
**caractérisé en ce qu'**une différence entre i) une épaisseur radiale de la couche de matériau d'étanchéité (5) dans la zone médiane entre deux saillies voisines (19) et ii) une épaisseur radiale la plus élevée d'une des saillies voisines (19), est égale à au moins 0,5 mm ; et/ou
**caractérisé en ce que** la couche de matériau d'étanchéité (5) s'étend dans une direction axiale sur au moins 90 % de la largeur de ladite portion (10) faisant office de bande de roulement.

8. Bandage pneumatique selon une ou plusieurs des revendications précédentes, **caractérisé en ce que** le matériau d'étanchéité comprend une ou plusieurs compositions choisies parmi : une composition à base d'un caoutchouc butyle, une composition à base de polyisoprène, une composition à base d'un caoutchouc naturel, une composition à base de polyuréthane, une composition à base de polybutadiène, une composition à base d'un caoutchouc de styrène-butadiène préparé en émulsion, une composition à base de EPDM, et une composition base de silicone.

9. Bandage pneumatique selon une ou plusieurs des revendications précédentes,
**caractérisé en ce que** la couche de matériau d'étanchéité comprend une des caractéristiques reprises ci-après, à savoir :
(i) des bandes de matériau d'étanchéité, adjacentes dans la direction axiale, qui s'étendent dans la direction circonférentielle autour d'un axe du bandage pneumatique (1, 11) et le long de la surface interne du bandage pneumatique (1, 11), et
(ii) une ou plusieurs bandes de matériau d'étanchéité enroulée en spirale autour d'un axe du bandage pneumatique (1, 11) et le long de la surface interne du bandage pneumatique (1, 11).

10. Bandage pneumatique selon la revendication 9, **caractérisé en ce que** les bandes de matériau d'étanchéité forment les saillies (19) et les zones de la couche de matériau d'étanchéité (5), dans la direction radiale, en dessous des nervures circonférentielles (9) ou des rangées de pavés de bande de roulement ; et dans lequel au moins plusieurs bandes de matériau d'étanchéité possèdent une ou plusieurs des caractéristiques indiquées ci-après, à savoir :
une épaisseur, dans la direction radiale, en vigueur dans les zones situées, dans la direction radiale, en dessous des rainures circonférentielles (8), supérieure à celle en vigueur dans les zones (18) situées, dans la direction radiale, en dessous des nervures circonférentielles (9) ou des rangées de pavés de bande de roulement, d'une manière telle que l'on obtient les saillies dans la couche de matériau d'étanchéité (5) ;
un arrangement sous la forme d'une superposition récipqoque d'une manière telle que l'on obtient les saillies (19) dans la couche de matériau d'étanchéité (5).

11. Bandage pneumatique selon une ou plusieurs des revendications précédentes,
**caractérisé en ce que** la portion (10) faisant office de bande de roulement possède deux portions faisant office d'épaulements et une portion centrale, dans la direction axiale, entre les deux portions faisant office d'épaulements, et dans lequel chaque portion faisant office d'épaulement comprend une nervure d'épaulement ou une rangée de pavés de bande de roulement d'épaulement dans la direction circonférentielle, et la portion centrale comprend au moins trois nervures circonférentielles et au moins quatre rainures circonférentielles, et dans lequel chaque nervure d'épaulement est délimitée par une desdites au moins quatre rainures circonférentielles ; et/ou
**caractérisé en ce que** les saillies (19) dans la couche de matériau d'étanchéité (5) et dans des zones (18) de la couche de matériau d'étanchéité qui possèdent une épaisseur radiale inférieure à l'épaisseur radiale desdites saillies (19) alternent dans une direction axiale (a) du bandage pneumatique (1, 11) ; et/ou
**caractérisé en ce que** lesdites zones (18) de la couche de matériau d'étanchéité (5) qui possèdent une épaisseur radiale inférieure à l'épaisseur radiale desdites saillies (19) possèdent une largeur axiale qui se situe dans une plage qui représente 60 % à 120 % de la surface la plus externe, dans la direction radiale, de la nervure respective ou de la rangée respective de pavés de bande de roulement, située au dessus dans la direction radiale.

12. Bandage pneumatique selon une ou plusieurs des revendications précédentes, **caractérisé en ce que** l'élément sous la forme d'une mousse (7) représente une bande de mousse qui s'étend dans une direction circonférentielle (c) sur une longueur circonférentielle qui correspond à au moins 50 %, de préférence à au moins 80 % d'une circonférence interne du bandage pneumatique (11), telle qu'on la mesure le long de la surface interne à un centre axial du bandage pneumatique (11).

13. Bandage pneumatique selon une ou plusieurs des revendications précédentes,
**caractérisé en ce que** la largeur axiale de l'élément (7) sous la forme d'une mousse se situe au sein d'une plage qui représente de 20 % à 50 % d'une largeur axiale maximale de la couche de matériau d'étanchéité (5) ; et/ou
**caractérisé en ce que** l'élément (7) sous la forme d'une mousse est exempt d'un revêtement ou d'une feuille situé à l'opposé de la couche de matériau d'étanchéité (5).

14. Bandage pneumatique selon une ou plusieurs des revendications précédentes, **caractérisé en ce que** l'élément (7) sous la forme d'une mousse comprend une ou plusieurs des caractéristiques reprises ci-après, à savoir :
un matériau d'amortissement du bruit ;
un matériau sous la forme d'une mousse polymère ;
un matériau sous la forme d'une mousse de polyuréthane ;
une configuration en forme de bande ; et
un matériau possédant une masse volumique qui se situe au sein d'une plage allant de 0,01 g/cm³ à 1 g/cm³.

15. Procédé de confection d'un bandage pneumatique en conformité avec une ou plusieurs des revendications précédentes, le procédé comprenant les étapes dans lesquelles :
on vulcanise le bandage pneumatique (1, 11) ;
on forme la couche de matériau d'étanchéité (5) sur une surface interne du bandage pneumatique vulcanisé (1, 11) en appliquant une ou plusieurs bandes de matériau d'étanchéité sur ladite surface interne et en formant des saillies (19) dans la couche de matériau d'étanchéité (5) dans des zones situées, dans la direction radiale, en dessous de rainures circonférentielles (9) de la portion (10) faisant office de bande de roulement du bandage pneumatique ; et
de manière facultative, on fixe au moins un élément (7) sous la forme d'une mousse aux portions les plus internes, dans la direction radiale, de deux saillies voisines (19).
